# EUROPEAN PATENT APPLICATION

(11) **EP 2 679 196 A1**
(43) Date of publication of application: **01.01.2014**
(21) Application number: 12749470.6
(22) Date of filing: 21.02.2012
(51) Int. Cl.: A61C 8/00, A61C 13/00

(54) **METHOD FOR DESIGNING DENTAL PROSTHESIS STRUCTURES ON IMPLANTS**

(30) Priority: 21.02.2011 ES 201130217
(71) Applicant: Soler Cegarra, Josep, 08810 Sant Pere de Ribes (ES)
(72) Inventor: Soler Cegarra, Josep, 08810 Sant Pere de Ribes (ES)
(74) Representative: Gallego Jiménez, José Fernando
(86) International application number: PCT/ES2012/000038
(87) International publication number: WO 2012/113947

(57) **Abstract**

Method comprising the modelling of the positions of the implants placed in the patient's mouth in order to calculate the program for milling the structure of the prosthesis, which can be coupled onto said implants, where said operation of modelling the implants comprises the following steps: - placing posts, which can be detected by X-ray, on the implants in the patient's mouth; - performing a CAT scan of the patient's mouth with the posts; - converting de CAT result into a three-dimensional computer model for the CAD/CAM manipulation thereof; - defining the posts in the computer model; - CAD/CAM modelling of the structure on the computer model with the defined posts; - generating a file containing positions and orientations for calculating the structure milling program.

## Description

### Object of the invention

The present invention relates to a method for designing dental prosthesis structures on implants, which comprises modelling the positions of the implants placed in the patient's mouth in order to calculate the program for milling the structure of the prosthesis, which can be coupled onto said implants.

### Application field of the invention.

This invention is applicable in the field of the production of dentures, particularly in making dental implants, which are attachable onto mandible and maxilla artificial implants.

### Background of the invention.

Currently, the methods used for creating structures for dental prosthesis onto implants are mainly two:
- Manual method by casting a chrome-cobalt alloy into moulds previously made in wax, with castable bored holes.
- CAD/CAM method using dental scanners

If one observes the second method, the commonly called CAD/CAM procedure starts by taking an impression in the mouth using a silicone tray and impression posts previously screwed into the already placed implants.

This impression mould is emptied with plaster by placing patient's implant replicas screwed to the impression posts that are in the silicone, inside the plaster, and thus a plaster model that is technically very similar to the patient's mandible and maxilla, is reproduced.

This plaster model is scanned by a dental scanner created for this purpose, and the obtained image is modelled, thereby designing the corresponding structure.

The result obtained by this CAD/CAM technique provides structures that do not always ensure a passive fit in the mouth. In fact the passive fit is not guaranteed even in the plaster model.

This is because precision errors accumulate in position and orientation of the implants from the impression taking until the structure forming.

Furthermore, silicone and plaster shrinks, what could be a sufficient ground for the plaster model not to have sufficient accuracy with respect to the patient's mouth.

Scanning this model also accumulates errors, since scanning posts should be mounted onto the replicas. The position and orientation of these posts is of vital importance to achieve an accurate scanning result.

At present there are intraoral scanners, which avoid some of the above-mentioned errors, but, in return, they have a reference cumulative error and require a dryness of the mouth that is difficult to achieve.

The applicant of the present invention is not aware of prior art that satisfactorily resolve the issues presented.

### Description of the invention

The method for designing dental prosthesis structures on implants, object of this invention, has technical particularities to reduce cumulative errors in the different modelling processes by making these processes unnecessary, and with the entire study being carried out using three-dimensional computer modelling based on direct measurement of the implants in the patient's mouth, thus ensuring high percentage accuracy of the milled structure with respect to the mouth.

The method is of the type which comprises the modelling of the positions of the implants placed in the patient's mouth in order to calculate the program for milling the structure of the prosthesis, which may be coupled onto said implants.

According to the invention, modelling of the implants comprises the following steps:
- Placing posts, which can be detected by X-ray, on the implants in the patient's mouth.
- Performing a CAT (computerized tomography) scan of the patient's mouth with the posts in place.
- Converting de CAT result into a three-dimensional computer model for the CAD/CAM manipulation thereof.
- Defining the post outlines in the computer model.
- CAD/CAM modelling of the structure on the computer model with the defined posts. The position obtained for the posts defined in the computer model is a perfect reference for the position and orientation of the implants. By knowing the length from the supporting zone to the upper part of the post used, it is possible to know both the exact position of the implant base as well as the perpendicular to the plane defined by the perimeter curve, or the plane of the original post, thus providing the exact orientation thereof.
- Generating a file containing positions and orientations for calculating the structure milling program. The file containing the positions and orientations is generated by the software used, for example, through "plugins" or add-ons developed for these structure design programs, which facilitate data input and creates the modelling of the structure as if it were a conventional scanned file.

The computer model into which the CAT result is converted is preferably a 3D CAD file for the manipulation thereof with the aid of conventional three-dimensional design programs. The file containing the computer model may be in STL, OBJ, IGES or any other format. This conversion may be carried out using existing software or a program created specifically for this purpose.

Posts can be of different designs, although it is preferable that said posts placed onto the implants during the CAT scanning operation have at least one X-ray transparent region of one millimetre at the fitting area with the implant. In this way, posts may be clearly defined in the CAT scan in order to create the outlines thereof.

In one variation, definition of the posts in the computer model comprises the aligned assembly of a post model, stored in a CAD format file, to the computer model. Thus the post defined in CAD format (for example in STL, IGES, etc. files) is placed on the image of the actual posts that are displayed in the computer model or 3D image created by the TAC scan.

In another variation of the method, the definition of the posts in the computer model includes creating the outlines of the post in said computer model.

This creation of post outlines in the computer model is carried out automatically using a computer program, although the manual creation of said outlines, depending on the software used, is not excluded.

This method benefits from increased assurance of the fact that the prosthesis to be manufactured shall be directly mounted onto the patient's implants at the first trial. The dentist has the advantage of saving on making several trial prostheses and corresponding visits, thus preventing the rejection of erroneous non-fitting failed prostheses while increasing customer satisfaction.

The reduction or even the absence of failed prosthesis facilitates the work of the Prosthetist and avoids making or modifying new prostheses, thus increasing the performance of her/his work. In addition, the establishment responsible for the milling shall mill the structure only once, which implies significant cost savings.

## Claims

1. Method for designing dental prosthesis structures on implants of the type comprising the modelling of the positions of the implants placed in the patient's mouth in order to calculate the program for milling the structure of the prosthesis, which can be coupled onto said implants, **characterized in that** the modelling of the implants comprises the following steps:
- placing posts, which can be detected by X-ray, on the implants in the patient's mouth,
- performing a CAT (computerized tomography) scan of the patient's mouth with the placed posts,
- converting de CAT result into a three-dimensional computer model for the CAD/CAM manipulation thereof,
- defining the posts in the computer model,
- CAD/CAM modelling of the structure on the computer model with the defined posts,
- generating a file containing positions and orientations for calculating the structure milling program.

2. Method, according to claim 1, **characterized in that** the posts placed onto the implants during the TAC scanning operation have at least one X-ray transparent region of one millimetre at the fitting area with the implant.

3. Method according to any of the preceding claims, **characterized in that** the definition of the posts in the computer model comprises the aligned assembly of a post model, stored in a CAD format file, to the computer model.

4. Method according to any of claims 1 to 2, **characterized in that** the definition of posts in the computer model comprises making the outlines of the posts in said computer model.

5. Method according to claim 4, **characterized in that** the making of the outlines of the posts in the computer model is carried out automatically by means of the computer program.
